# EUROPEAN PATENT SPECIFICATION

(11) **EP 1 684 510 B1**
(45) Date of publication and mention of the grant of the patent: **08.04.2015**
(21) Application number: 06001428.9
(22) Date of filing: 24.01.2006
(51) Int. Cl.: G11B 27/034, G11B 27/10, G11B 27/28, H04N 5/76, H04N 21/433, H04N 21/8545, H04N 5/781, H04N 9/804, H04N 9/82

(54) **Apparatus and method for searching start position of broadcasting program**
Verfahren und Vorrichtung zum Suchen eines Fernsehprogrammanfangs
Procédé et dispositif pour rechercher le début d'un programme de télévision

(30) Priority: 24.01.2005 KR 2005006331
(43) Date of publication of application: 26.07.2006
(73) Proprietor: Humax Co., Ltd., Yougin City, Kyonggi-Do 449-080 (KR)
(72) Inventor: Chung, Dong Chul, Seoul, 151-050 (KR)
(74) Representative: Zardi, Marco

(56) References cited:
- EP-A2- 0 399 853
- EP-A2- 1 037 211
- EP-A2- 1 102 275
- EP-A2- 1 292 135
- US-A1- 2003 172 383
- US-A1- 2003 202 773
- US-A1- 2004 078 818

## Description

### BACKGROUND OF THE INVENTION

### Field of the Invention

The present invention relates to a method and apparatus for searching a start position of a broadcast program, and more particularly, to an apparatus and method for searching a start position of a broadcast program which is recorded in a recording medium.

### Description of the Related Art

Digital broadcast receivers, such as a set top box (STB), for receiving digital broadcasts are widely popularized. Recently, a digital broadcast receiver having a Personal Video Recording (PVR) function which is capable of recording broadcast programs in a recording medium such as a hard disc drive (HDD), is developed and popularized.

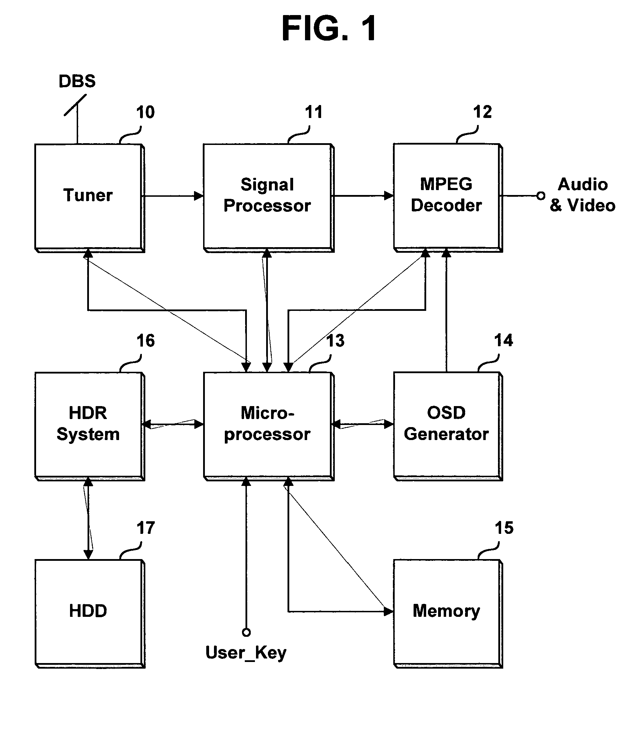

The digital broadcast receiver, as illustrated in FIG. 1, includes a tuner 10, a signal processor 11, a MPEG decoder 12, a microprocessor 13, an OSD generator 14, a memory 15, a HDR (HDD Recording) system 16, a hard disc (HDD), etc.

The microprocessor 13 controls the tuner 10 to select an arbitrary broadcast channel according to a user's request, and controls the signal processor 11 and the MPEG decoder 12 to output a broadcast program received through the broadcast channel as audio and video.

Also, the microprocessor 13 controls the HDR system 16 to record, in real time, a broadcast program being received in the HDD 17, according to a user's request.

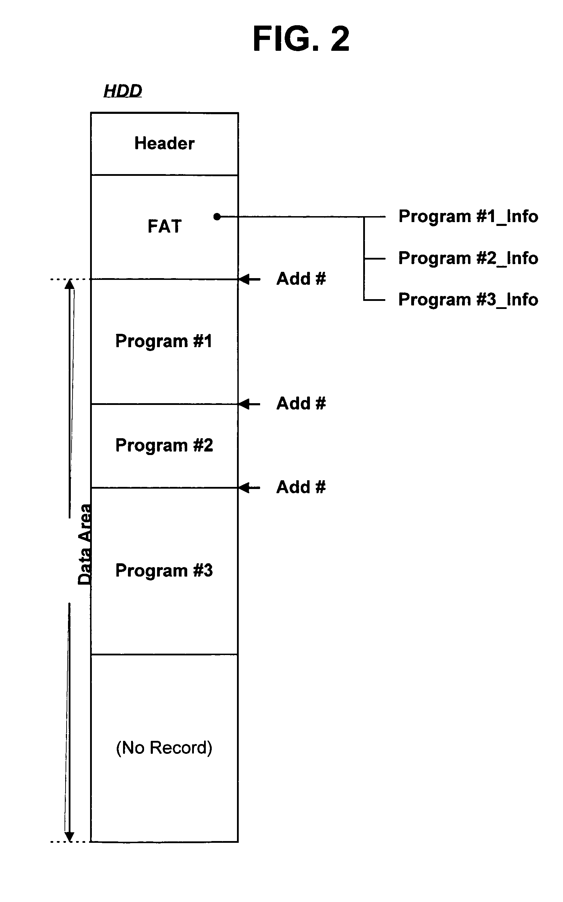

In the HDD 17, as illustrated in FIG. 2, a header area, a File Allocation Table (FAT) area, and a data area are divided and allocated.

When recording broadcast programs in the data area of the HDD 17, the microprocessor 13 creates first, second, and third program information Program#1_Info, Program#2_Info, and Program#3_Info respectively corresponding to first, second, and third broadcast programs Program#1, Program#2, and Program#3 sequentially recorded, and records the first, second, and third program information Program#1_Info, Program#2_Info, and Program#3_Info in the FAT area. The first, second, and third program information Program#1_Info, Program#2_Info, and Program#3_Info include addresses Add# of data sections in which the respective programs are recorded, data sizes, reproduction times, etc.

If a user requests reproduction of an arbitrary broadcast program, for example, the third broadcast program Program#3, the microprocessor 13 reproduces the third broadcast program Program#3 from its recording start position with reference to a start address Add# included in the corresponding third program information Program#3_Info.

However, a digital broadcast receiver having a general PVR function creates the corresponding program information and records it in a FAT area after a data recording operation of recording a broadcast program in a HDD is terminated. Accordingly, when a user requests reproduction of a start part of a broadcast program which is received and recorded in real time, it is difficult to quickly search a recording position corresponding to the start part of the broadcast program.

Also, although a broadcast program which is received and recorded in real time changes to a new broadcast program while a data recording operation is performed, the digital broadcast receiver manages only the recording position of the broadcast program received when the data recording operation has been started, without separately managing a recording position of the new broadcast program. Accordingly, it is difficult to quickly search a recording position corresponding to a start part of a broadcast program which a user currently listens and views.

EP 1 292 135 A2 discloses a program record and playback system provided with a reception device which receives broadcast program on a plurality of channels, a record and playback device which records and plays back the received broadcast program, and a control device which controls the reception, recording and playback of the broadcast program. The control device has a broadcast contents determination device which determines contents of a broadcast program recorded by the record and playback device, a delimiter signal assignment device which assigns a delimiter signal to a breakpoint of the contents of the recorded broadcast program, and a playback instructions device which refers to the delimiter signal, and issues to the record and playback device and instruction to play back the recorded broadcast program from the breakpoint of the contents. This document discloses a method according to the preamble of claim 1, and an apparatus according to the preamble of claim 4.

US 2003/172383 discloses a private video recorder for recording contents of TV program delivered from TV stations, wherein data of the contents of the TV program are memorized into segments in a contents data memory area, and the contents data are controlled as one video picture file by appointing the segments memorizing the contents data in segment appointing information of the video picture file. When the contents recorded in the private video receiver as edited, only the appointment of the segments in the segment appointing information is rewritten without cutting, copying or inserting the contents data.

US 2003/0202773 A1 describes a system and a method for indexing commercials in a video presentation. Herein, a DVR memory includes a commercial indexer and a program navigator. A data storage includes at least one content file and at least one index file. The commercial indexer, the program navigator, the content file and the index file may be used to provide enhanced navigation of video content during playback. The commercial indexer provides automatic detection of audio and/or video events in a video signal or data stream.

The detected events may correlate to transitions in the content of the video data, such as breaks between commercials and program content. The program navigator provides navigation options for viewing stored video content. The index file includes pointers to a plurality of locations in the content file. The index file may include pointers for program start and end locations, evenly spaced pointers for providing a time-based index of the program content, or pointers corresponding to an event in video content, such as a black field, content change or other detectable content. Thus, commercial groups may be skipped or otherwise navigated based upon data pointers linking the stored events to corresponding locations in a video data file.

EP 0 399 853 A2 describes a recording and a reproducing device. Herein, a new information is recorded in a range having absolute addresses between T_{S} and T_{E} in an information recording area. Upon recording the new information, in the TOC area, are recorded the absolute addresses T_{S} indicating the recording start position of the new information and T_{E} indicating the recording end position thereof as its additional information. If it is recognized that a second information has already been recorded in the recording start position where the new information is instructed to be recorded, warning is given to show that the position has already been occupied. According to the warning, a user decides whether or not he records the new information with T_{S} as its recording start position, and if he judges that the second information and the start information deserve to remain as information of utility value, he specifies another position without recordings of information again and starts recording the new information. On the other hand, if the user judges that the second information and the third information does not deserve to remain since they have less utility value, he may instruct to record the new information with T_{S} as its recording start position. In that case, the second information and the third information are partially erased by the overwriting operation of the new information.

EP 1 037 211 A2 describes a disk recording and/or reproducing apparatus. Herein, an internal recording area of a system entry memory, which is a nonvolatile memory, is divided into a boot area, an FAT area, and a directory area. Under the control of a hard disc control circuit, the contents of the system entry memory are updated sequentially as AV data is recorded on the hard disc on a cluster-by-cluster basis. Further, the system entry memory outputs data held therein to the hard disc control circuit with prescribed timing. When the hard disc control circuit receives a write control command, a file management data based on a file name and an extension that are added to the write control command and the block number of the free region being detected is generated. Thereafter, the generated file management data is recorded in the system entry memory. The hard disc control circuit records AV data of one cluster in a free region of a hard disc that has been detected. A hard disc control circuit then judges whether all data have been recorded. If a negative judgment result is obtained, the hard disc control circuit detects the next free region of the hard disc from the FAT area of the system entry memory. Thereafter, the hard disc control circuit updates the contents of a region of the FAT area of the system entry memory that corresponds to the cluster in which the AV data was recorded so that the cluster number (block number) of the free region that was detected is identified.

### SUMMARY OF THE INVENTION

It is an object of the present invention to provide a method and an apparatus for quickly searching a start position of a broadcast program which is currently recorded.

This object is solved by the method according to claim 1 and by the apparatus according to claim 4.

Further advantages, refinements and embodiments of the invention are described in the respective sub-claims.

There is provided a method for searching a start position of a broadcast program, including: when a new broadcast program is started while recording a broadcast program which is received and output as audio and video in a recording medium, storing position information regarding a start part of the new broadcast program; and searching and reproducing a start part of a current broadcast program recorded in the recording medium with reference to the position information.

There is provided an apparatus for searching a start position of a broadcast program, including: a signal processor outputting a received broadcast program as audio and video; a recording unit recording the broadcast program in a recording medium; a detection unit detecting whether a new broadcast program is started; a memory storing position information regarding a start part of a broadcast program; and a control unit storing position information regarding a start part of the new broadcast program in the memory if the new broadcast program is started, and searching and reproducing the start part of the new broadcast program recorded in the recording medium with reference to the position information.

Preferably, a determination on whether the new broadcast program is started is done on the basis of Electronic Program Guide (EPG) information or a change in audio and video signals.

Preferably, if a position at which data of a current broadcast program is recorded is identical to position information of a different broadcast program stored in the memory, the position information of the different broadcast program is deleted.

Preferably, the position information is divided and stored for each broadcast program.

### BRIEF DESCRIPTION OF THE DRAWINGS

FIG. 1 is a block diagram of a digital broadcast receiver having a general Personal Video Recording (PVR) function;
FIG. 2 illustrates an embodiment in which broadcast programs are recorded and managed in a hard disc (HDD) of the digital broadcast receiver having the general PVR function;
FIG. 3 is a block diagram of a digital broadcast receiver having a PVR function, according to an embodiment of the present invention;
FIG. 4 illustrates an embodiment in which broadcast programs are recorded and managed in a HDD of the digital broadcast receiver having the PVR function according to the embodiment of the present invention; and
FIG. 5 is a flowchart illustrating a method for searching a start position of a broadcast program, according to an embodiment of the present invention.

### DETAILED DESCRIPTION OF PREFFERRED EMBODIMENTS

Hereinafter, an apparatus and method for searching a start position of a broadcast program, according to the present invention, will be described in detail with reference to the appended drawings.

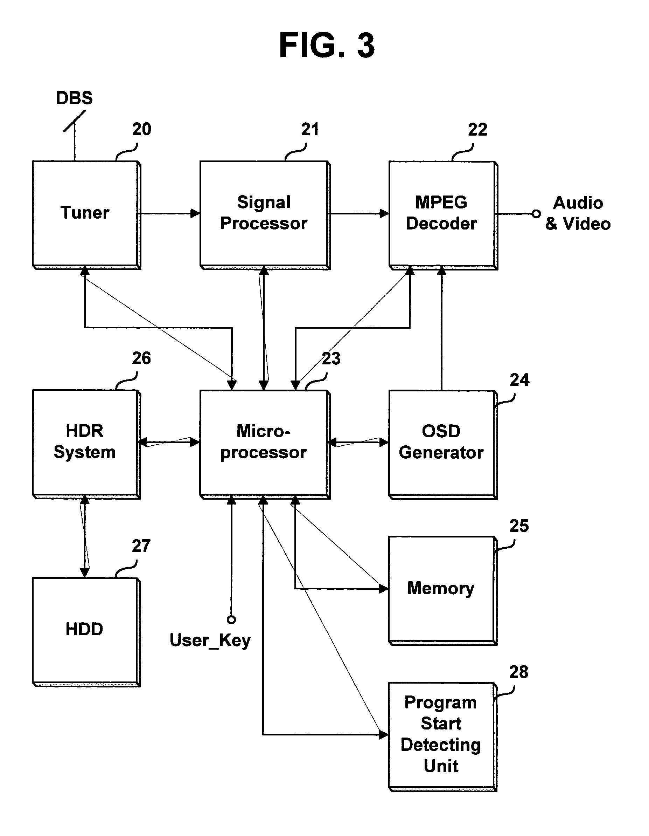

Referring to FIGS. 3, a digital broadcast receiver, such as a set top box, a TV, etc., having a Personal Video Recording (PVR) function, to which the present invention is applied, includes a tuner 20, a signal processor 21, a MPEG decoder 22, a microprocessor 23, an OSD generator 24, a memory 25, a HDR system 26, and a hard disc (HDD). The digital broadcast receiver can further include a program start detecting unit 28.

The program start detecting unit 28 detects whether a broadcast program which is received in real time changes to a new broadcast program. The program start detecting unit 28 detects whether a broadcast program which is currently received changes to a new broadcast program, for example, with reference to Electronic Program Guide (EPG) information additionally provided through a digital broadcast.

Alternatively, the program start detecting unit 28 can detect whether the broadcast program changes according to a change in video and audio signals appearing between broadcast programs. For example, if a video period of a black screen and an audio period of no sound are simultaneously detected for a predetermined time, the program start detecting unit 28 determines that the broadcast program which is received in real time changes to a new broadcast program.

The microprocessor 23 controls the tuner 20 to select an arbitrary broadcast channel according to a user's request, and controls the signal processor 21 and the MPEG decoder 22 to output a broadcast program received through the broadcast channel as audio and video.

Also, the microprocessor 23 controls the HDR system 26 to record the broadcast program which is received in real time in the HDD 27, according to a user's request.

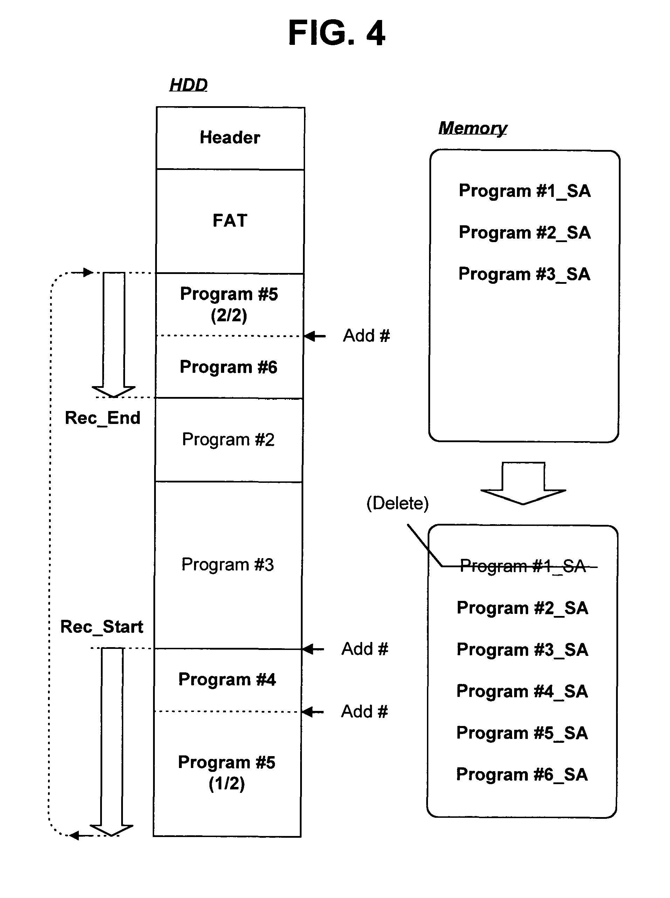

For example, as illustrated in FIG. 4, when a new fourth broadcast program Program#4 is recorded in the state where first, second, and third programs Program#1, Program#2, and Program#3 are recorded in a data area of the HDD 27, the microprocessor 23 temporarily stores recording start position information Program#4_SA of the fourth broadcast program Program#4 being currently recorded, separately, in the memory 25, in addition to recording start position information Program#1_SA, Program#2_SA, and Program#3_SA corresponding to the first, second, and third broadcast programs Program#1, Program#2, and Program#3.

Thereafter, if the program start detecting unit 28 detects that a new broadcast program, for example, a fifth broadcast program Program#5 is received, the microprocessor 23 stores recording start position information Program#5_SA of the fifth program Program#5 in the memory 25.

Then, as illustrated in FIG. 4, if the fifth broadcast program Program#5 is overwritten on the data section in which the first broadcast program Program#1 is recorded, the microprocessor 23 deletes the recording start position information Program#1_SA of the first broadcast program Program#1 stored in the memory 25 in real time.

Also, if the program start detecting unit 28 detects that a sixth broadcast program Program#6 is received, the microprocessor 23 stores recording start position information Program#6_SA of the sixth broadcast program Program#6 in the memory 25. Accordingly, when a user requests reproduction of a start part of the sixth broadcast program Program#6 which he or she currently listens and views, the sixth broadcast program Program#6 can be quickly reproduced from its recording start position using the recording start position information Program#6_SA of the sixth broadcast program Program#6 stored in the memory 25.

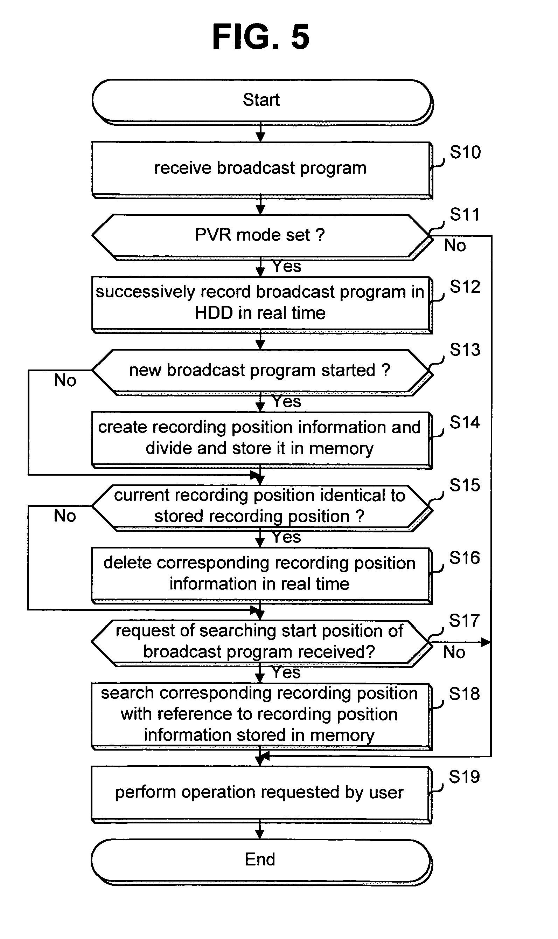

FIG. 5 is a flowchart illustrating a method for searching a start position of a broadcast program, according to an embodiment of the present invention.

The microprocessor 23 controls the tuner 20 to select an arbitrary broadcast channel, and controls the signal processor 21 and the MPEG decoder 22 to output a broadcast program received through the broadcast channel as audio and video (operation S10).

Meanwhile, if a PVR mode is set by a user (operation S11), the microprocessor 23 controls the HDR system 26 to record the received broadcast program in the HDD 27 in real time (operation S12), and the program start detecting unit 28 detects whether a new broadcast program is started with reference to EPG information or a change in video and audio signals, etc.

If the programs start detecting unit 28 detects that a new broadcast program is started (operation S13), the microprocessor 23 stores recording start position information of the new broadcast program to be recorded in the HDD 27, separately, in the memory 25 (operation S14). For example, as described above with reference to FIG. 4, the memory 25 stores recording start position information Program#4_SA of a fourth broadcast program #4, in addition to recording start position information Program#1_SA, Program#2_SA, and Program#3_SA of first, second, and third broadcast programs Program#1, Program#2, and Program#3.

Then, the microprocessor 23 compares the current recording position with recording position information stored in the memory 25 (operation S15). For example, as described above with reference to FIG. 4, if a fifth broadcast program Program#5 is overwritten on the data section in which the first broadcast program Program#1 is recorded, the current recording position is identical to the recording start position information Program#1_SA of the first broadcast program Program#1. In this case, the microprocessor 23 deletes the recording start position information Program#1_SA of the first broadcast program Program#1 stored in the memory 25 in real time (operation S16).

If a user requests an operation of searching a start position of a current broadcast program, for example, a sixth broadcast program Program#6 while listening and viewing the broadcast program Program#6 (operation S17), the microprocessor 23 reproduces the sixth broadcast program Program#6 from its start part recorded in the corresponding recording position, with reference to recording start position information Program#6_SA of the sixth broadcast program Program#6 stored in the memory 25 (operation S18). Then, the microprocessor 23 performs an operation requested by the user (operation S19). Accordingly, it is possible to quickly search and reproduce the start part of a broadcast program updated and recorded in the HDD 27.

Accordingly, it is possible to quickly search and reproduce a start part of a broadcast program which is currently recorded.

## Claims

1. A method for searching a start position of a broadcast program, comprising:
- when a first broadcast program changes into a second broadcast program while recording a broadcast signal output as audio and video in a recording medium, storing in a memory (25) position information corresponding to a start part of the second broadcast program, and
- if it is requested to reproduce the second program by a user, searching the memory (25) for the position information for the second broadcast program and reproducing the second broadcast program being recorded in the recording medium (27) from its start part recorded in a recording position indicated by the searched position information, said searching and reproducing being performed before the recording of the broadcast signal has ended,
**characterized in that** the second broadcast program is the program which the user listens and views when said reproduction is requested, and the first broadcast program and the second broadcast program are received from the same tuner (20),
the position information is stored in a memory (25) separately from the recording medium (27),
a current recording position of the second broadcast program in the recording medium is compared with recording position information stored in the memory (25),
- if the current recording position of the second broadcast program in the recording medium is identical to the recording start position information corresponding to a start part of a third broadcast program previously stored in the memory (25), the recording start position information for the third broadcast program is deleted from the memory (25), and the second broadcast program starts to be overwritten on the third broadcast program without stopping recording.

2. The method according to claim 1, wherein the start part of the second broadcast program is detected on the basis of Electronic Program Guide (EPG) information or a change in audio or video signals.

3. The method according to claim 1, wherein the position information in the memory (25) separately includes an address (Program #1_SA) corresponding to a start part of the first broadcast program and the address (Program #2_SA) corresponding to the start part of the second broadcast program.

4. An apparatus for recording broadcast programs, comprising:
- a signal processor (21, 22) for outputting a received broadcast signal as audio and video;
- a recording unit (26) for performing a recording operation of the broadcast signal in a recording medium (27), wherein the broadcast signal includes a first broadcast program and a second broadcast program;
- a detection unit (28) for detecting a start part of the second broadcast program during recording of the broadcast signal;
- a memory (25) for storing position information regarding start parts of broadcast programs; and
- a control unit (23) for storing in the memory (25) the position information for the second program when the detection unit (28) detects that the first broadcast program changes into the second broadcast program,
wherein the control unit (23) is configured, if it is requested to reproduce the second program by a user, to search the memory (25) for the position information for the second broadcast program and to control the signal processor (21, 22) to reproduce the second broadcast program being recorded in the recording medium (27) from its start part recorded in a recording position indicated by the searched position information while controlling the recording unit (26) to record the broadcast signal in the recording medium (27), the control unit (23) being configured to perform the searching and reproducing before the recording of the broadcast signal has ended,
**characterized in that** the second broadcast program is the program which the user listens and views when said reproduction is requested, and the first broadcast program and the second broadcast program are received from the same tuner (20),
the memory (25) and the recording medium (27) are separated from each other,
- the control unit (23) is configured to compare a current recording position of the second broadcast program in the recording medium with recording position information stored in the memory (25),
- if the current recording position is identical to the recording start position information corresponding to a start part of a third broadcast program previously stored in the memory (25), the control unit (23) deletes the recording start position information for the third broadcast program from the memory (25), and starts to overwrite the second broadcast program on the third broadcast program without stopping recording.

5. The apparatus according to claim 4, wherein the detection unit detects the start part of the second broadcast program on the basis of Electronic Program Guide (EPG) information or a change in audio and video signals.

6. The apparatus according to claim 4, wherein the memory (25) stores separately an address (Program #1_SA) corresponding to a start part of the first broadcast program and the address (Program #2_SA) corresponding to the start part of the second broadcast program.

7. The apparatus according to claim 4, wherein the apparatus is installed in a TV or a set top box which receives digital broadcasts.

## Patentansprüche

1. Ein Verfahren zum Suchen einer Startposition eines Rundfunkprogramms, aufweisend:
- wenn ein erstes Rundfunkprogramm während Aufzeichnens eines als Ton und Bild ausgegebenen Rundfunksignals in einem Aufzeichnungsmedium in ein zweites Rundfunkprogramm wechselt, Speichern einer Positionsinformation, die einem Startteil des zweiten Rundfunkprogramms entspricht, in einem Speicher (25), und
- falls durch einen Benutzer angefordert wird, das zweite Programm wiederzugeben, Durchsuchen des Speichers (25) nach der Positionsinformation für das zweite Rundfunkprogramm und Wiedergeben des zweiten Rundfunkprogramms, das in dem Aufzeichnungsmedium (27) aufgezeichnet wird, von seinem in einer durch die gesuchte Positionsinformation angegebenen Aufzeichnungsposition aufgezeichneten Startteil an, wobei das Suchen und Wiedergeben durchgeführt wird, bevor das Aufzeichnen des Rundfunksignals geendet hat,
**dadurch gekennzeichnet, dass**
das zweite Rundfunkprogramm das Programm ist, welchem der Benutzer zuhört und zusieht, wenn die Wiedergabe angefordert wird, und das erste Rundfunkprogramm und das zweite Rundfunkprogramm von dem gleichen Tuner (20) empfangen werden,
die Positionsinformation in einem Speicher (25) getrennt von dem Aufzeichnungsmedium (27) gespeichert wird,
eine gegenwärtige Aufzeichnungsposition des zweiten Rundfunkprogramms in dem Aufzeichnungsmedium mit in dem Speicher (25) gespeicherter Aufzeichnungspositionsinformation verglichen wird,
- falls die gegenwärtige Aufzeichnungsposition des zweiten Rundfunkprogramms in dem Aufzeichnungsmedium identisch mit der Aufzeichnungsstartpositionsinformation ist, welche einem Startteil eines zuvor in dem Speicher (25) gespeicherten dritten Rundfunkprogramms entspricht, die Aufzeichnungsstartpositionsinformation für das dritte Rundfunkprogramm aus dem Speicher (25) gelöscht wird und das zweite Rundfunkprogramm beginnt, ohne Anhalten der Aufzeichnung auf dem dritten Rundfunkprogramm überschrieben zu werden.

2. Das Verfahren gemäß Anspruch 1, wobei der Startteil des zweiten Rundfunkprogramms auf der Grundlage einer Electronic-Program-Guide-(EPG)-Information oder einer Änderung in Ton- oder Bildsignalen erkannt wird.

3. Das Verfahren gemäß Anspruch 1, wobei die Positionsinformation in dem Speicher (25) eine Adresse (Program #1_SA), welche einem Startteil des ersten Rundfunkprogramms entspricht, und die Adresse (Program #2_SA), welche dem Startteil des zweiten Rundfunkprogramms entspricht, getrennt aufweist.

4. Eine Vorrichtung zum Aufzeichnen von Rundfunkprogrammen, aufweisend:
- einen Signalprozessor (21, 22) zum Ausgeben eines empfangenen Rundfunksignals als Ton und Bild;
- eine Aufzeichnungseinheit (26) zum Durchführen eines Aufzeichnungsvorgangs des Rundfunksignals in einem Aufzeichnungsmedium (27), wobei das Rundfunksignal ein erstes Rundfunkprogramm und ein zweites Rundfunkprogramm aufweist;
- eine Erkennungseinheit (28) zum Erkennen eines Startteils des zweiten Rundfunkprogramms während Aufzeichnens des Rundfunksignals;
- einen Speicher (25) zum Speichern einer Positionsinformation bezüglich Startteilen von Rundfunkprogrammen; und
- eine Steuereinheit (23) zum Speichern der Positionsinformation für das zweite Programm in dem Speicher (25), wenn die Erfassungseinheit (28) erkennt, dass das erste Rundfunkprogramm in das zweite Rundfunkprogramm wechselt,
wobei die Steuereinheit (23) konfiguriert ist, den Speicher (25) nach der Positionsinformation für das zweite Rundfunkprogramm zu durchsuchen und den Signalprozessor (21, 22) zu steuern, das in dem Aufzeichnungsmedium (27) aufgezeichnete zweite Rundfunkprogramm von seinem in einer durch die gesuchte Positionsinformation angegebenen Aufzeichnungsposition aufgezeichneten Startteil an wiederzugeben und gleichzeitig die Aufzeichnungseinheit (26) zu steuern, das Rundfunksignal in dem Aufzeichnungsmedium (27) aufzuzeichnen, wenn durch einen Benutzer angefordert wird, das zweite Programm wiederzugeben, wobei die Steuereinheit (23) konfiguriert ist, das Suchen und Wiedergeben durchzuführen, bevor das Aufzeichnen des Rundfunksignals geendet hat,
**dadurch gekennzeichnet, dass**
das zweite Rundfunkprogramm das Programm ist, welchem der Benutzer zuhört und zusieht, wenn die Wiedergabe angefordert wird, und das erste Rundfunkprogramm und das zweite Rundfunkprogramm von dem gleichen Tuner (20) empfangen werden,
der Speicher (25) und das Aufzeichnungsmedium (27) voneinander getrennt sind,
- die Steuereinheit (23) konfiguriert ist, eine gegenwärtige Aufzeichnungsposition des zweiten Rundfunkprogramms in dem Aufzeichnungsmedium mit in dem Speicher (25) gespeicherter Aufzeichnungspositionsinformation zu vergleichen,
- falls die gegenwärtige Aufzeichnungsposition identisch mit der Aufzeichnungsstartpositionsinformation ist, welche einem Startteil eines zuvor in dem Speicher (25) gespeicherten dritten Rundfunkprogramms entspricht, die Steuereinheit (23) die Aufzeichnungsstartpositionsinformation für das dritte Rundfunkprogramm aus dem Speicher (25) löscht und beginnt, das zweite Rundfunkprogramm auf dem dritten Rundfunkprogramm ohne Anhalten der Aufzeichnung zu überschreiben.

5. Die Vorrichtung gemäß Anspruch 4, wobei die Erkennungseinheit den Startteil des zweiten Rundfunkprogramms auf der Grundlage einer Electronic-Program-Guide-(EPG)-Information oder einer Änderung in Ton- und Bildsignalen erkennt.

6. Die Vorrichtung gemäß Anspruch 4, wobei der Speicher (25) eine Adresse (Program #1_SA), welche einem Startteil des ersten Rundfunkprogramms entspricht, und die Adresse (Program #2_SA), welche dem Startteil des zweiten Rundfunkprogramms entspricht, getrennt speichert.

7. Die Vorrichtung gemäß Anspruch 4, wobei die Vorrichtung in einem Fernsehgerät oder einer Set-Top-Box, welche digitale Rundfunksendungen empfängt, eingebaut ist.

## Revendications

1. Procédé pour rechercher la position de début d'un programme télévisé, comprenant :
- le stockage dans une mémoire (25) des informations de position qui correspondent à une position de début d'un second programme, lorsqu'un premier programme se termine et que le second programme commence, pendant l'enregistrement dans un support d'enregistrement d'un signal converti en audio et en vidéo, et
- la recherche dans la mémoire (25) des informations de position du second programme, si un utilisateur souhaite rediffuser le second programme, et la rediffusion du second programme en cours d'enregistrement sur un support d'enregistrement (27), depuis sa position de début enregistrée dans une position d'enregistrement indiquée par les informations de position recherchées, les recherche et rediffusion étant réalisées avant la fin de l'enregistrement du signal,
**caractérisé en ce que** le second programme est le programme que l'utilisateur écoute et regarde lorsqu'il en demande la rediffusion, et **en ce que** le premier programme et le second programme sont reçus par un même tuner (20),
les informations de position sont stockées dans la mémoire (25) distincte du support d'enregistrement (27),
la position d'enregistrement actuelle du second programme dans le support d'enregistrement est comparée avec les informations relatives à la position d'enregistrement stockées dans la mémoire (25),
- si la position d'enregistrement actuelle du second programme sur le support d'enregistrement est identique aux informations relatives à la position de début de l'enregistrement correspondant à la position de début d'un troisième programme, enregistré précédemment dans la mémoire (25), alors les informations relatives à la positon de début du troisième programme sont effacées de la mémoire (25) et le deuxième programme est alors enregistré sur le troisième, sans pause dans l'enregistrement.

2. Procédé selon la revendication 1, dans lequel la position de début du second programme est détectée sur la base des informations du guide des programmes électronique (EPG), ou d'un changement des signaux audio ou vidéo.

3. Procédé selon la revendication 1, dans lequel les informations de position stockées dans la mémoire (25) incluent, de façon distincte, une adresse (Programme 1_SA) qui correspond à la position de début du premier programme, et l'adresse (Programme 2_SA) qui correspond à la position de début du deuxième programme.

4. Appareil pour enregistrer les programmes, comprenant :
- un processeur de signal (21, 22) utilisé pour convertir le signal reçu en audio et en vidéo ;
- une unité d'enregistrement (26) utilisée pour réaliser l'enregistrement du signal reçu sur un support d'enregistrement (27), où le signal reçu inclut à la fois un premier et un second programme ;
- une unité de détection (28) utilisée pour détecter la position de début du second programme lors de l'enregistrement du signal ;
- une mémoire (25) utilisée pour stocker les informations de position relatives à la positon de début des programmes ; et
- une unité de commande (23) utilisée pour stocker les informations de position du second programme dans la mémoire (25) lorsque l'unité de détection (28) détecte que le premier programme est terminé et que le deuxième commence,
dans lequel l'unité de commande (23) est configurée, lorsqu'un utilisateur lui demande de rediffuser le second programme, de façon à chercher les informations de position du second programme dans la mémoire (25) et à contrôler le processeur de signal (21, 22) afin de rediffuser le second programme en cours d'enregistrement dans le support d'enregistrement (27), depuis sa position de début enregistrée dans la position d'enregistrement indiquée par les informations de position recherchées, tout en contrôlant l'unité d'enregistrement (26) afin d'enregistrer le signal dans le support d'enregistrement (27), l'unité de commande (23) étant configurée de façon à réaliser les opérations de recherche et de rediffusion avant que l'enregistrement du signal ne se termine,
**caractérisé en ce que** le second programme est le programme que l'utilisateur écoute et regarde lorsqu'il en demande la rediffusion, et **en ce que** le premier programme et le second programme sont reçus par un même tuner (20),
la mémoire (25) et le support d'enregistrement (27) sont distincts l'un de l'autre,
- l'unité de commande (23) est configurée de façon à comparer la position d'enregistrement actuelle du second programme dans le support d'enregistrement et les informations de position stockées dans la mémoire (25),
- si la position d'enregistrement actuelle est identique aux informations relatives à la position de début de l'enregistrement qui correspond à la position de début d'un troisième programme enregistré précédemment dans la mémoire (25), alors l'unité de commande (23) efface de la mémoire (25) les informations relatives à la position de début de l'enregistrement du troisième programme, et commence à enregistrer le second programme sur le troisième sans pause dans l'enregistrement.

5. Appareil selon la revendication 4, dans lequel l'unité de détection détecte la position de début du second programme en se basant sur les informations du guide des programmes électronique (EPG) ou sur la détection d'un changement dans les signaux audio et vidéo.

6. Appareil selon la revendication 4, dans lequel la mémoire (25) stocke séparément une adresse (Programme 1_SA) qui correspond à la position de début du premier programme et l'adresse (Programme2_SA) qui correspond à la position de début du second programme.

7. Appareil selon la revendication 4, dans lequel ledit appareil est installé sur une télévision ou un décodeur TV recevant des programmes télévisés numériques.
